# EUROPÄISCHE PATENTANMELDUNG

(11) **EP 1 010 732 A1**
(43) Veröffentlichungstag der Anmeldung: **21.06.2000**
(21) Anmeldenummer: 99124709.9
(22) Anmeldetag: 11.12.1999
(51) Int. Cl.: C09B 67/48, C09B 67/10, C09B 63/00

(54) **Verfahren zur Herstellung neuer Kristallmodifikationen von C.I. Pigment Red 53:2**

(30) Priorität: 19.12.1998 DE 19858853
(71) Anmelder: Clariant GmbH, 65929 Frankfurt am Main (DE)
(72) Erfinder: Schmidt, Martin U., Dr., 65931 Frankfurt am Main (DE)

(57) **Zusammenfassung**

C.I. Pigment Red 53:2 wird in neuen Kristallmodifikationen (epsilon-, zeta-, eta-, theta-, jota-, kappa-, lambda-, ny-, xi-, omikron-, pi- und rho-Phase) erhalten, wenn man eine beliebige andere Phase dieses Pigments in bestimmten organischen Lösemitteln erhitzt und wieder ausfällt. Die neuen Kristallphasen unterscheiden sich voneinander in Rheologie und Coloristik.

## Beschreibung

Als C.I. Pigment Red 53:2 (im folgenden: P.R.53:2) wird die Verbindung der Formel (1) bezeichnet, die aus einer Kupplung von diazotierter 2-Amino-5-chlor-4-methyl-benzolsulfonsäure mit β-Naphthol, und nachfolgender Umsetzung der gebildeten Sulfosäure mit einem Calciumsalz entsteht (M = ½ Ca²⁺).

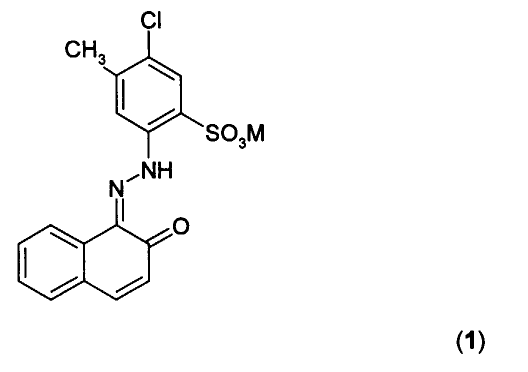

Im festen Zustand kann die Verbindung der Formel (1) auch in einer anderen tautomeren oder cis/trans-isomeren Form vorliegen, und ggf. noch Na⁺-Ionen, Cl⁻-Ionen, Wassermoleküle und Lösemittelmoleküle enthalten.

Die meisten organischen Pigmente existieren in mehreren verschiedenen Kristallmodifikationen, auch Phasen genannt. Kristallmodifikationen haben dieselbe chemische Zusammensetzung, aber eine unterschiedliche Anordnung der Bausteine (Moleküle) im Kristall. Die Kristallstruktur bestimmt die chemischen und physikalischen Eigenschaften, daher unterscheiden sich die einzelnen Kristallmodifikationen oftmals in der Rheologie, der Farbe und anderen coloristischen Eigenschaften. Die unterschiedlichen Kristallmodifikationen können durch Röntgenpulverdiffraktometrie identifiziert werden.

Von P.R.53:2 (M= ½ Ca²⁺) sind bisher nur drei Kristallmodifikationen bekannt, die als α-Phase, γ-Phase und δ-Phase bezeichnet werden (Deutsche Patentanmeldungen 198 27 272.3 und 198 27 273.1).

Die alpha-Phase zeichnet sich durch folgende charakteristische Linien im Röntgenpulverdiagramm aus: 2Θ-Werte in Grad (relative Intensitäten): 5.1 (100); 6.6 (73); 10.2 (37); 12.2 (39); 13.8 (31); 14.4 (27); 17.8 (24); 18.4 (22); 20.4 (20); 24.6 (26); 25.8 (86).

Die γ-Phase zeigt folgende charakteristische Linien: 4.4 (49); 5.8 (100); 8.8 (23); 10.3 (25); 10.9 (33); 12.2 (15); 13.9 (16); 15.4 (15); 16.7 (28); 17.6 (16); 18.4/18.6 (18/18, Doppellinie); 19.7 (20); 20.8 (18); 23.2 (48); 24.0 (21); 24.8 (37); 25.2 (34); 26.6 (19); 27.3 (19); 27.9 (12); 29.3 (14).

Die δ-Phase zeigt folgende charakteristrische Linien: 3.3 (32), 4.7 (100), 7.5 (14), 9.4 (19), 10.5 (13), 13.8 (10), 14.2 (9), 14.9 (10), 16.7 (11), 17.6 (9), 18.1 (16), 18.9 (10), 20.4 (7), 21.1 ( 9), 22.1 (9), 22.7 (12), 23.1 (9), 23.6 (13), 24.1 (9), 24.9 (10), 25.5 (23), 26.3 (9), 27.7 (9), 28.1 (6), 28.9 (6), 30.4 (6).

Es wurde überraschenderweise gefunden, daß sich die Phase von C.I. Pigment Red 53:2 in neue Phasen umwandeln läßt, wenn man das Pigment in bestimmten flüssigen Medien erhitzt, wobei sich das Pigment teilweise oder vollständig löst, und anschließend wieder ausfällt.

Gegenstand der vorliegenden Erfindung ist daher ein Verfahren zur Phasenumwandlung von C.I. Pigment Red 53:2, dadurch gekennzeichnet, daß man C.I. Pigment Red 53:2 in einem oder mehreren organischen Lösemitteln oder einem Gemisch dieser Lösemittel mit Wasser, wobei der Wassergehalt 0 bis 90 Gew.-%, insbesondere 1 bis 50 Gew.-%, betragen kann, mit Ausnahme der Lösemittel Isopropanol, Isobutanol, Amylalkohol, Chlorbenzol und N-Methylpyrrolidon, auf eine Temperatur von 30 bis 300°C, bevorzugt von 60 bis 200°C, erhitzt und anschließend das Pigment wieder ausfällt.

Bevorzugt sind Lösemittel aus der Gruppe Dimethylacetamid; Methanol, Ethanol, n-Propanol, C₆-C₁₆-Alkohol; n-Butanol; sek.-Butanol; Aceton,Butanon; Xylol, Trimethylbenzol, Dichlorbenzol, Chlornaphthalin, Nitrobenzol, Phenetol, Pyridin, Phthalsäuredimethylester, Essigsäureethylester, Methylisobutylketon, Acetophenon; Chinolin; Morpholin; Dimethylformamid, N-Methylformamid; Ethylenglykol; Glykolsäure-n-butylester sowie Dimethylsulfoxid.

Nach dem erfindungsgemäßen Verfahren können Kristallmodifikationen von P.R.53:2 hergestellt werden, die sich durch folgende charakteristische Linien (Cu-K_{α}-Strahlung, 2Θ-Werte in Grad, d-Werte in Å⁻¹, relative Intensität (Iᵣₑₗ) in %) auszeichnen:
ε ( 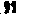 epsilon")-Phase:

| 2Θ | d | Iᵣₑₗ |
|---|---|---|
| 4.48 | 19.7 | 55 |
| 5.87 | 15.1 | 36 |
| 7.08 | 12.5 | 61 |
| 7.87 | 11.2 | 100 |
| 9.01 | 9.8 | 32 |
| 9.84 | 9.0 | 49 |
| 11.84 | 7.5 | 25 |
| 12.47 | 7.1 | 32 |
| 14.31 | 6.2 | 26 |
| 14.80 | 6.0 | 27 |
| 15.29 | 5.8 | 26 |
| 15.82 | 5.6 | 58 |
| 16.80 | 5.3 | 27 |
| 17.23 | 5.1 | 29 |
| 18.80 | 4.7 | 40 |
| 19.40 | 4.6 | 27 |
| 19.82 | 4.5 | 46 |
| 20.66 | 4.3 | 33 |
| 21.44 | 4.1 | 29 |
| 21.88 | 4.1 | 36 |
| 22.69 | 3.9 | 17 |
| 23.14 | 3.8 | 19 |
| 23.85 | 3.7 | 40 |
| 24.63 | 3.6 | 34 |
| 25.48 | 3.5 | 32 |
| 26.12 | 3.4 | 76 |
| 26.42 | 3.4 | 65 |
| 27.91 | 3.2 | 26 |
| 28.76 | 3.1 | 29 |
| 29.88 | 3.0 | 12 |
| 30.30 | 2.9 | 12 |
| 31.68 | 2.8 | 20 |
| 31.98 | 2.8 | 13 |
| 32.36 | 2.8 | 16 |
| 32.60 | 2.7 | 17 |

ζ ( 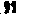 zeta")-Phase:

| 2Θ | d | Iᵣₑₗ |
|---|---|---|
| 5.10 | 17.3 | 24 |
| 7.13 | 12.4 | 62 |
| 7.97 | 11.1 | 100 |
| 10.09 | 8.8 | 68 |
| 14.27 | 6.2 | 54 |
| 14.67 | 6.0 | 24 |
| 15.92 | 5.6 | 14 |
| 17.13 | 5.2 | 18 |
| 17.84 | 5.0 | 40 |
| 18.70 | 4.7 | 18 |
| 19.07 | 4.7 | 20 |
| 19.93 | 4.5 | 29 |
| 21.53 | 4.1 | 26 |
| 22.76 | 3.9 | 56 |
| 23.58 | 3.8 | 92 |
| 24.58 | 3.6 | 28 |
| 25.25 | 3.5 | 16 |
| 25.95 | 3.4 | 99 |
| 27.38 | 3.3 | 29 |
| 27.95 | 3.2 | 14 |
| 28.62 | 3.1 | 48 |

η( 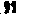 eta")-Phase:

| 2Θ | d | Iᵣₑₗ |
|---|---|---|
| 4.57 | 19.3 | 100 |
| 9.07 | 9.7 | 68 |
| 12.18 | 7.3 | 45 |
| 14.77 | 6.0 | 65 |
| 21.09 | 4.2 | 30 |
| 26.60 | 3.3 | 96 |

θ( 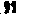 theta")-Phase:

| 2Θ | d | Iᵣₑₗ |
|---|---|---|
| 5.17 | 17.0 | 26 |
| 10.34 | 8.5 | 13 |
| 12.17 | 7.3 | 9 |
| 13.24 | 6.7 | 10 |
| 14.60 | 6.1 | 23 |
| 15.79 | 5.6 | 15 |
| 16.63 | 5.3 | 27 |
| 17.80 | 5.0 | 28 |
| 18.04 | 4.9 | 16 |
| 19.71 | 4.5 | 13 |
| 21.06 | 4.2 | 17 |
| 24.08 | 3.7 | 12 |
| 24.47 | 3.6 | 12 |
| 25.82 | 3.4 | 100 |
| 26.67 | 3.4 | 33 |
| 27.81 | 3.2 | 10 |
| 28.52 | 3.1 | 17 |

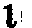 ( 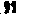 jota")-Phase:

| 2Θ | d | Iᵣₑₗ |
|---|---|---|
| 4.20 | 21.1 | 100 |
| 8.35 | 10.6 | 93 |
| 10.86 | 8.1 | 60 |
| 11.42 | 7.7 | 35 |
| 12.37 | 7.2 | 56 |
| 13.84 | 6.4 | 32 |
| 15.48 | 5.7 | 64 |
| 15.94 | 5.6 | 40 |
| 16.45 | 5.4 | 43 |
| 17.05 | 5.2 | 33 |
| 17.50 | 5.1 | 31 |
| 18.59 | 4.8 | 63 |
| 19.58 | 4.5 | 47 |
| 19.86 | 4.5 | 52 |
| 20.80 | 4.3 | 42 |
| 21.13 | 4.2 | 32 |
| 21.30 | 4.1 | 35 |
| 21.64 | 4.1 | 34 |
| 22.14 | 4.0 | 26 |
| 22.33 | 4.0 | 29 |
| 22.77 | 3.9 | 36 |
| 23.25 | 3.8 | 39 |
| 23.59 | 3.8 | 93 |
| 24.07 | 3.7 | 45 |
| 25.49 | 3.5 | 64 |
| 26.46 | 3.4 | 55 |
| 26.69 | 3.3 | 35 |
| 29.49 | 3.0 | 45 |

κ( 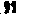 kappa")-Phase:

| 2Θ | d | Iᵣₑₗ |
|---|---|---|
| 6.55 | 13.5 | 32 |
| 12.62 | 7.0 | 26 |
| 12.99 | 6.8 | 28 |
| 13.73 | 6.4 | 50 |
| 14.33 | 6.2 | 36 |
| 15.01 | 5.9 | 32 |
| 15.47 | 5.7 | 30 |
| 16.30 | 5.4 | 24 |
| 16.78 | 5.3 | 23 |
| 17.14 | 5.2 | 38 |
| 18.31 | 4.8 | 60 |
| 18.70 | 4.7 | 44 |
| 20.39 | 4.4 | 25 |
| 24.33 | 3.4 | 22 |
| 24.70 | 3.6 | 38 |
| 25.34 | 3.5 | 48 |
| 26.14 | 3.4 | 100 |
| 27.24 | 3.3 | 27 |
| 28.00 | 3.2 | 24 |
| 28.25 | 3.2 | 24 |
| 29.91 | 3.0 | 22 |

λ( 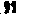 lambda")-Phase:

| 2Θ | d | Iᵣₑₗ |
|---|---|---|
| 5.03 | 17.5 | 100 |
| 5.35 | 16.5 | 57 |
| 6.88 | 12.8 | 26 |
| 9.43 | 9.4 | 23 |
| 11.09 | 8.0 | 30 |
| 13.78 | 6.4 | 17 |
| 14.36 | 6.2 | 21 |
| 15.70 | 5.6 | 15 |
| 18.25 | 4.9 | 18 |
| 18.90 | 4.7 | 19 |
| 20.36 | 4.4 | 16 |
| 20.68 | 4.3 | 16 |
| 21.38 | 4.2 | 15 |
| 22.90 | 3.9 | 18 |
| 24.46 | 3.6 | 22 |
| 25.00 | 3.6 | 18 |
| 26.14 | 3.4 | 28 |
| 28.54 | 3.1 | 14 |

ν( 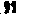 ny")-Phase:

| 2Θ | d | Iᵣₑₗ |
|---|---|---|
| 4.76 | 18.5 | 64 |
| 7.70 | 11.5 | 43 |
| 9.22 | 9.6 | 24 |
| 9.50 | 9.3 | 46 |
| 11.64 | 7.6 | 15 |
| 12.74 | 6.9 | 21 |
| 13.43 | 6.6 | 33 |
| 13.76 | 6.4 | 15 |
| 14.11 | 6.3 | 13 |
| 14.27 | 6.2 | 15 |
| 15.72 | 5.6 | 16 |
| 16.26 | 5.4 | 10 |
| 17.37 | 5.1 | 12 |
| 17.73 | 5.0 | 20 |
| 18.95 | 4.7 | 20 |
| 19.91 | 4.5 | 20 |
| 20.45 | 4.3 | 12 |
| 20.87 | 4.3 | 19 |
| 21.51 | 4.1 | 13 |
| 22.79 | 3.9 | 21 |
| 23.12 | 3.8 | 28 |
| 23.44 | 3.8 | 20 |
| 24.59 | 3.6 | 17 |
| 25.26 | 3.5 | 49 |
| 25.96 | 3.4 | 29 |
| 26.35 | 3.4 | 100 |
| 27.05 | 3.3 | 44 |
| 28.03 | 3.2 | 14 |
| 28.72 | 3.1 | 10 |
| 29.38 | 3.0 | 8 |
| 29.89 | 3.0 | 7 |
| 31.30 | 2.9 | 9 |
| 32.12 | 2.8 | 7 |
| 32.50 | 2.8 | 9 |
| 33.27 | 2.7 | 8 |

ξ( 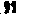 xi")-Phase:

| 2Θ | d | Iᵣₑₗ |
|---|---|---|
| 4.88 | 18.1 | ca. 50 |
| 7.83 | 11.3 | 100 |
| 8.59 | 10.3 | 39 |
| 11.57 | 7.6 | 21 |
| 15.76 | 5.6 | 34 |
| 17.06 | 5.2 | 46 |
| 17.40 | 5.1 | 24 |
| 19.66 | 4.5 | 36 |
| 19.99 | 4.4 | 54 |
| 20.40 | 4.4 | 27 |
| 21.41 | 4.1 | 28 |
| 21.83 | 4.1 | 31 |
| 24.49 | 3.6 | 68 |
| 25.00 | 3.6 | ca. 70 |
| 26.83 | 3.3 | 21 |
| 27.15 | 3.3 | 17 |
| 31.33 | 2.9 | 20 |
| 31.60 | 2.8 | 18 |

ο( 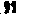 omikron")-Phase:

| 2Θ | d | Iᵣₑₗ |
|---|---|---|
| 12.54 | 7.1 | 58 |
| 13.61 | 6.5 | 44 |
| 17.33 | 5.1 | 47 |
| 18.64 | 4.8 | 52 |
| 19.48 | 4.6 | 26 |
| 24.56 | 3.6 | 100 |
| 25.43 | 3.5 | 56 |

π( 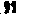 pi")-Phase:

| 2Θ | d | Iᵣₑₗ |
|---|---|---|
| 5.60 | 15.8 | 100 |
| 9.09 | 9.7 | 82 |
| 9.62 | 9.2 | 72 |
| 11.21 | 7.9 | 27 |
| 11.65 | 7.6 | 4 |
| 12.86 | 6.9 | 5 |
| 15.24 | 5.8 | 6 |
| 15.88 | 5.6 | 22 |
| 16.85 | 5.3 | 14 |
| 18.23 | 4.9 | 21 |
| 19.07 | 4.7 | 35 |
| 19.40 | 4.6 | 54 |
| 20.82 | 4.3 | 20 |
| 22.23 | 4.0 | 24 |
| 23.02 | 3.9 | 27 |
| 23.49 | 3.8 | 23 |
| 24.79 | 3.6 | 98 |
| 26.01 | 3.4 | 41 |
| 27.66 | 3.2 | 75 |
| 28.20 | 3.2 | 10 |
| 30.12 | 3.0 | 9 |
| 30.85 | 2.9 | 9 |
| 31.34 | 2.9 | 9 |
| 31.52 | 2.8 | 6 |
| 31.59 | 2.8 | 6 |

ρ( 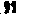 rho")-Phase:

| 2Θ | d | Iᵣₑₗ |
|---|---|---|
| 4.96 | 17.8 | 100 |
| 6.05 | 14.6 | 60 |
| 8.48 | 10.4 | 22 |
| 9.95 | 8.9 | 14 |
| 13.93 | 6.4 | 13 |
| 15.12 | 5.9 | 13 |
| 15.51 | 5.7 | 13 |
| 17.54 | 5.1 | 14 |
| 19.41 | 4.6 | 14 |
| 20.99 | 4.2 | 12 |
| 21.50 | 4.1 | 14 |
| 24.64 | 3.6 | 13 |
| 25.44 | 3.5 | 23 |
| 26.00 | 3.4 | 40 |
| 26.89 | 3.3 | 16 |
| 28.15 | 3.2 | 11 |

Alle Linienlagen sind mit einer Ungenauigkeit von ± 0.2° behaftet.

Die erfindungsgemäßen Phasen können neben Ca-Ionen noch Na-Ionen, Cl-Ionen, Wassermoleküle und Lösungsmittelmoleküle im Kristallgitter enthalten.

Die neuen Phasen unterscheiden sich hinsichtlich ihrer Eigenschaften von den bekannten Kristallmodifikationen. Sie sind schwerlöslich und zeichnen sich durch orange bis rote, z.T. braune Farbtöne, hohe Farbstärken und gute coloristische Eigenschaften aus.

Um eine Phasenumwandlung zu erzielen, liegt P.R. 53:2-Ausgangsprodukt in einer Phase vor, die sich von der herzustellenden unterscheidet, vorzugsweise in der alpha-Phase. Es können auch Phasengemische eingesetzt werden. Das als Ausgangsprodukt eingesetzte P.R.53:2 kann als Trockenpigment, als wasserfeuchter Preßkuchen oder als wäßrige Suspension eingesetzt werden.

Die epsilon-Phase erhält man, wenn man C.I. Pigment Red 53:2, welches in einer beliebigen anderen Modifikation vorliegt, in Dimethylacetamid, oder einer Mischung aus Dimethylacetamid und bis zu 90 Gew.-% Wasser, insbesondere bis zu 50 Gew.-% Wasser, auf eine Temperatur von 40°C bis 200°C, vorzugsweise von 60°C bis zum Siedepunkt des Lösemittels bei Normaldruck, erhitzt, zweckmäßigerweise für 1 Minute bis zu 6 Stunden, vorzugsweise 10 Minuten bis 2 Stunden, wobei das Pigment teilweise oder vollständig in Lösung geht. Ein längeres Erhitzen ist prinzipiell möglich, bringt jedoch keine technischen Vorteile. Anschließend wird das Pigment ausgefällt, beispielsweise durch Temperaturerniedrigung und/oder durch Zugabe von Wasser, einem zweiten Lösemittel mit geringerem Lösevermögen, und/oder eines Salzes, z.B. NaCl, und/oder durch Änderung des pH-Wertes.
Das Erhitzen kann bei Normaldruck, bei Unterdruck, oder unter Druck erfolgen. Als zweites Lösungsmittel eignen sich beispielsweise Benzol oder Alkane.

Die Änderung des pH-Wertes kann durch Zugabe von Säuren oder Basen hervorgerufen werden.

Die zeta-Phase entsteht in analoger Weise, wenn anstelle von Dimethylacetamid als Lösemittel Methanol, Ethanol, n-Propanol, oder ein Alkohol mit 6 bis 16 C-Atomen eingesetzt wird.

Die eta-Phase entsteht in analoger Weise, wenn als Lösemittel 1-Butanol eingesetzt wird.

Die theta-Phase entsteht in analoger Weise, wenn als Lösemittel Xylol, Trimethylbenzole, Dichlorbenzole, Chlornaphthaline, Nitrobenzol, Phenetol, Pyridin, Phthalsäuredimethylester, Essigsäureethylester, Methylisobutylketon, Butanon oder Acetophenon eingesetzt wird.

Bei der Verwendung von Chinolin oder Acetophenon entsteht ein Gemisch aus θ- und ζ-Phase.

Die iota-Phase entsteht in analoger Weise, wenn als Lösemittel Morpholin eingesetzt wird.

Die kappa-Phase entsteht, wenn als Lösemittel N-Methylformamid eingesetzt wird und das Pigment vollständig aufgelöst wird.

Die lambda-Phase entsteht in analoger Weise, wenn als Lösemittel Aceton und das Pigment als wasserfeuchter Preßkuchen eingesetzt wird. Bei Behandlung von trockenem Pigment mit Aceton entsteht die theta-Phase.

Die ny-Phase entsteht in analoger Weise wie die epsilon-Phase, wenn als Lösemittel Ethylenglykol eingesetzt wird.

Die xi-Phase entsteht in analoger Weise, wenn als Lösemittel Glykolsäure-*n*-butylester eingesetzt wird.

Die omikron-Phase entsteht in analoger Weise, wenn als Lösemittel ein Gemisch aus N-Methylformamid und 10 bis 90 Gew.-%, bezogen auf das Lösemittelgemisch, Wasser eingesetzt wird und das Pigment nicht vollständig aufgelöst wird.

Die pi-Phase entsteht in analoger Weise wie die epsilon-Phase, wenn als Lösemittel Dimethylsulfoxid eingesetzt wird.

Die rho-Phase entsteht in analoger Weise, wenn als Lösemittel Dimethylformamid eingesetzt wird.

Bei der Herstellung der zeta-, eta, theta-, iota-, lambda-, ny-, xi-, pi- und rho-Phase kann das jeweilige Lösemittel bis zu 90 Gew.-% Wasser oder Wasser bis zur Sättigungskonzentration enthalten, ausgenommen bei der Herstellung der theta-Phase mit Aceton.

In allen Fällen kann es von den angewandten Temperaturen, Temperaturverläufen und Konzentrationen, sowie von dem etwaigen Vorhandensein von Kristallkeimen, von Verunreinigungen oder Fremdstoffen abhängen, welche Kristallmodifikationen bzw. welche Mischungen verschiedener Kristallmodifikationen sich bilden.

P.R.53:2 in den erfindungsgemäßen Modifikationen oder Modifkationsmischungen kann in der Wärme oder nach Abkühlen, z.B. auf Raumtemperatur in der üblichen Weise, z.B. durch Abfiltrieren, oder durch Verdampfen des Lösemittels, gegebenenfalls unter Anlegen von Vakuum, isoliert werden. Es kann zweckmäßig sein, den Preßkuchen bzw. Rückstand mit Wasser oder mit einer organischen Flüssigkeit, z.B. niederen Alkoholen wie Methanol, Ethanol, Propanol, Isopropanol oder mit Aceton zu waschen.

Je nach gewünschtem Anwendungsbereich kann es sinnvoll sein, das erhaltene Pigment einer mechanischen Feinverteilung zu unterwerfen. Die Feinverteilung kann durch Naß- oder Trockenmahlung erfolgen. An die Mahlung kann sich eine Behandlung mit einem Lösemittel, mit Wasser, oder einem Lösemittel/Wasser-Gemisch anschließen, um das Pigment in eine gebrauchsfähige Form zu überführen.

Eine reine oder überwiegend reine Phase entsteht bevorzugt, wenn man von einer Lösung ausgeht, in der bereits Impfkristalle oder Kristallkeime der gewünschten Phase vorhanden sind, und wenn man diese Lösung so langsam abkühlt bzw. ein zweites Lösemittel, eine Säure, Base oder ein Salz so langsam zugibt, beispielsweise innerhalb von 1 bis 24 Stunden, daß die Übersättigung in einem Bereich gehalten wird, in dem die Kristallwachstumsgeschwindigkeit relativ hoch, die Kristallkeimbildungsgeschwindigkeit jedoch relativ gering ist, so daß die vorhandenen Kristallkeime unter Beibehaltung der Phase wachsen. Der Einsatz eines mechanischen Rührers kann von Vorteil sein, da er vorhandene Kristalle der gewünschten Phase in viele kleinere Bruchstücke zerschlägt, die dann wieder als Kristallkeime für die gewünschte Phase dienen (sogenannte Sekundärnukleation). Wenn die Übersättigung höher ist, z.B. weil die Lösung schneller abgekühlt wird oder ein zweites Lösemittel, eine Säure, Base oder ein Salz schneller zugegeben werden, ist die Kristallkeimbildungsgeschwindigkeit viel höher, so daß spontan viele Kristallkeime verschiedener Phasen entstehen können; dabei erhält man vorzugsweise Mischungen verschiedener Phasen.

Die Herstellung einer Mischung verschiedener Phasen kann von Interesse sein, wenn bestimmte coloristische und rheologische Eigenschaften gewünscht werden, beispielsweise ein bestimmter Orange-Farbton, der zwischen den Farbtönen der einzelnen Phasen liegt. Andererseits ist es auch möglich, eine Mischung aus einzelnen Phasen aufzukonzentrieren, um einen höheren Anteil der gewünschten Modifikation oder auch eine reine Phase zu erhalten, beispielsweise durch Windsichten, Rekristallisation, selektives Herauslösen oder Extrahieren der nichtgewünschten Phase, oder durch wiederholtes Anwenden von erfindungsgemäßen Verfahrensmaßnahmen, in denen das Entstehen der gewünschten Phase begünstigt ist.

Gegenstand der vorliegenden Erfindung ist daher auch eine C.I. Pigment Red 53:2-Mischung, die mindestens 10%, vorzugsweise mindestens 25%, insbesondere mindestens 50%, besonders bevorzugt mindestens 75%, der ε-Phase, der ζ-Phase, der η-Phase, der θ-Phase, der 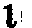 -Phase, der κ-Phase, der λ-Phase, der ν-Phase, der ξ-Phase, der ο-Phase, der π-Phase, der ρ-Phase oder eines Gemisches dieser Phasen enthält.

Es ist auch möglich, daß ein Teil (bis zu 50%) der Ca-Ionen im Kristallgitter der erfindungsgemäßen Kristallmodifikation durch andere Kationen z.B. Na⁺, H⁺, K⁺, NH₄⁺, Mg²⁺, Sr²⁺, Ba²⁺, Sn²⁺, Zn²⁺, Mn²⁺, Fe²⁺, Fe³⁺, Al³⁺, Si⁴⁺, Ti⁴⁺, TiO²⁺ ersetzt sind. Solche Mischkristalle können sich bilden, wenn bei den vorstehend beschriebenen Maßnahmen der Herstellung der erfindungsgemäßen Kristallmodifikationen auch andere Kationen z.B. Na⁺, K⁺, NH₄⁺, Mg²⁺, Sr²⁺, Ba²⁺, Sn²⁺, Zn²⁺, Mn²⁺, Fe²⁺, Fe³⁺, Al³⁺, Si⁴⁺, Ti⁴⁺, TiO²⁺ zugegen sind.

Zur Erleichterung der Herstellung der gewünschten Modifikation, zur Stabilisierung der gewünschten Modifikation, zur Verbesserung der coloristischen Eigenschaften und zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Nachbehandlungen, oder nach den Nachbehandlungen zugegeben werden. Der am besten geeignete Zeitpunkt muß zuvor durch orientierende Versuche ermittelt werden.

C.I. Pigment Red 53:2 der beschriebenen Modifikationen oder in Mischungen, die diese Modifikationen enthalten, oder in Form von Mischkristallen mit anderen Kationen eignen sich zum Pigmentieren von Lacken und Kunststoffen, zur Herstellung von Druckfarben und wäßrigen Pigmentpräparationen und zur Saatguteinfärbung.

Die erfindungsgemäßen Phasen von P.R. 53:2 sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonderbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Phasen von P.R. 53:2 geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Phasen von P.R. 53:2 als Farbmittel in Ink-Jet Tinten auf wäßriger und nichtwäßriger Basis sowie in solchen Tinten, die nach dem hot-melt-Verfahren arbeiten, geeignet.

Außerdem sind die erfindungsgemäßen Phasen von P.R.53:2 auch geeignet als Farbmittel für Farbfilter, sowohl für die additive wie für die subtraktive Farberzeugung.

In den folgenden Beispielen sind Teile und Prozentangaben auf das Gewicht bezogen.
Die Bestimmung der Kristallmodifikation der erhaltenen Produkte erfolgt durch Röntgenpulverdiffraktometrie.

### Beispiele:

### A) Synthese von P.R. 53:2

226 Teile 2-Amino-4-methyl-5-chlor-benzolsulfonsäure werden bei Raumtemperatur mit 2500 Teilen Wasser und 150 Teilen 31%iger Salzsäure verrührt. Bei 20-25°C wird mit 173 Teilen 40%iger NaNO₂-Lösung innerhalb von 30 Minuten diazotiert und 1 Stunde bei Raumtemperatur nachgerührt.
150 Teile β-Naphthol werden in 1100 Teilen 4%iger NaOH gelöst und bei Raumtemperatur innerhalb von 60 Minuten zur Diazo-Suspension zugegeben.

Der pH-Wert der Suspension wird mit NaOH auf 8,0 gestellt und 77 Teile CaCl₂ und 500 Teile Wasser zugegeben. Die Suspension wird 15 Minuten lang bei 95°C gerührt, heiß filtriert und der Preßkuchen salzfrei gewaschen. Man erhält 1271 Teile Preßkuchen P.R. 53:2 in der α-Phase.

### 1) Behandlung mit Dimethylacetamid

52 Teile dieses Preßkuchens werden mit 200 Teilen N,N-Dimethylacetamid zum Sieden erwärmt. Die Lösung kühlt über Nacht ab. Das Pigment wird durch Zugabe von 150 Teilen Wasser unter Rühren ausgefällt, und anschließend abfiltriert. Der Rückstand wird mit Wasser gewaschen und bei 60°C getrocknet. Man erhält 15 Teile P.R.53:2 in der ε-Modifikation mit kleinen Beimengungen des Natriumsalzes von P.R.53 als orangerotes Pulver.

### 2) Behandlung mit Ethanol

10 Teile P.R.53:2 in der α-Phase werden mit 1000 Teilen Ethanol zum Sieden erhitzt. Man läßt über Nacht abkühlen. Das Pigment wird abfiltriert. Der Rückstand wird mit Aceton gewaschen und bei 60°C getrocknet. Man erhält 9 Teile P.R.53:2 in der ζ-Modifikation als rotes Pulver.

### 3) Behandlung mit 1-Butanol

Man verfährt wie in Beispiel 2, verwendet aber 1-Butanol anstelle von Ethanol. Man erhält 8 Teile P.R.53:2 in der η-Modifikation mit geringen Beimengungen an ζ-Modifikation als rotbraunes Pulver.

### 4) Behandlung mit Acetophenon

Man verfährt wie in Beispiel 2, verwendet aber Acetophenon anstelle von Ethanol. Man erhält 9 Teile P.R.53:2 in der θ-Modifikation mit Beimengungen an ζ-Modifikation als rotes Pulver.

### 5) Behandlung mit Morpholin

10 Teile P.R.53:2 in der α-Phase werden mit 1000 Teilen Morpholin zum Sieden erhitzt. Man läßt die Lösung über Nacht abkühlen, setzt 1500 Teile Wasser hinzu, und erwärmt, bis man eine klare Lösung erhält. Man läßt die Lösung abkühlen und filtriert das ausgefallene Pigment ab. Der Rückstand wird mit Aceton gewaschen und bei 60°C getrocknet. Man erhält 8 Teile P.R.53:2 in der 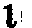 -Modifikation als braunes Pulver.

### 6) Behandlung mit N-Methylformamid

Man verfährt wie in Beispiel 5, verwendet aber N-Methylformamid anstelle von Morpholin. Man erhält 8 Teile P.R.53:2 in der κ-Modifikation mit Beimengungen an θ-Modifikation als orangerotes Pulver.

### 7) Behandlung mit Aceton

40 Teile des wasserfeuchten Preßkuches aus Beispiel 1 werden mit 1000 Teilen Aceton zum Sieden erhitzt. Man läßt über Nacht abkühlen. Das Pigment wird abfiltriert. Der Rückstand wird mit Aceton gewaschen und bei 60°C getrocknet. Man erhält 8 Teile P.R.53:2 in der λ-Modifikation als rotes Pulver.

### 8) Behandlung mit Ethylenglykol

Man verfährt wie in Beispiel 2, verwendet aber Ethylenglykol anstelle von Ethanol. Man erhält 9 Teile P.R.53:2 in der ν-Modifikation als braunes Pulver.

### 9) Behandlung mit Glykolsäure-n-butylester

Man verfährt wie in Beispiel 2, verwendet aber Glykolsäure-n-butylester anstelle von Ethanol. Man erhält 9 Teile P.R.53:2 in der ξ-Modifikation als trüb-oranges Pulver.

### 10) Behandlung mit einem NMF-Wasser-Gemisch

10 Teile P.R.53:2 in der α-Phase werden mit einem Gemisch aus 120 Teilen N-Methylformamid und 80 Teilen Wasser zum Sieden erhitzt. Man läßt die Suspension über Nacht abkühlen. Das Pigment wird abfiltriert. Der Rückstand wird mit Aceton gewaschen und bei 60°C getrocknet. Man erhält 9 Teile P.R.53:2 in der ο-Modifikation mit Beimengungen an γ-Modifikation als rotes Pulver.

### 11) Behandlung mit DMSO

Man verfährt wie in Beispiel 2, verwendet aber Dimethylsulfoxid anstelle von Ethanol. Man erhält 10 Teile P.R.53:2 in der π-Modifikation als oranges Pulver.

### 12) Behandlung mit DMF

10 Teile P.R.53:2 in der α-Phase werden mit 1000 Teilen Dimethylformamid zum Sieden erhitzt. Anschließend wird das Dimethylformamid bei 100°C im Vakuum verdampft. Man erhält 10 Teile P.R.53:2 in der ρ-Modifikation als rotbraunes Pulver.

## Patentansprüche

1. Verfahren zur Phasenumwandlung von C.I. Pigment Red 53:2, dadurch gekennzeichnet, daß man C.I. Pigment Red 53:2 in einem oder mehreren organischen Lösemitteln oder einem Gemisch dieser Lösemittel mit Wasser, wobei der Wassergehalt 0 bis 90 Gew.-% betragen kann, mit Ausnahme der Lösemittel Isopropanol, Isobutanol, Amylalkohol, Chlorbenzol und N-Methylpyrrolidon, auf eine Temperatur von 30 bis 300°C erhitzt und anschließend das Pigment wieder ausfällt

2. Verfahren nach Anspruch 1, dadurch gekennzeichnet, daß auf eine Temperatur von 60°C bis 200°C erhitzt wird.

3. Verfahren nach Anspruch 1 oder 2, dadurch gekennzeichnet, daß man das Pigment durch Temperaturerniedrigung ausfällt.

4. Verfahren nach einem oder mehreren der Ansprüche 1 bis 3, dadurch gekennzeichnet, daß man das Pigment durch Zugabe von Wasser, einem Lösemittel mit geringem Lösevermögen, einem Salz, einer Säure oder einer Lauge ausfällt.

5. Verfahren nach Anspruch 1 oder 2, dadurch gekennzeichnet, daß man das Pigment durch Verdampfen des Lösemittels ausfällt.

6. Verfahren nach einem oder mehreren der Ansprüche 1 bis 5, dadurch gekennzeichnet, daß C.I. Pigment Red 53:2 in der alpha-Phase eingesetzt wird.

7. Verfahren nach einem oder mehreren der Ansprüche 1 bis 6, dadurch gekennzeichnet, daß das organische Lösemittel Dimethylacetamid; Methanol, Ethanol, n-Propanol, C₆-C₁₆-Alkohol; n-Butanol; sek.-Butanol; Aceton, Butanon; Xylol, Trimethylbenzol, Dichlorbenzol, Chlornaphthalin, Nitrobenzol, Phenetol, Pyridin, Phthalsäuredimethylester, Essigsäureethylester, Methylisobutylketon, Acetophenon; Chinolin; Morpholin; N-Methylformamid, Dimethylformamid; Ethylenglykol; Glykolsäure-n-butylester oder Dimethylsulfoxid ist.

8. C.I. Pigment Red 53:2 der Formel (1) oder einer tautomeren oder cis/trans-isomeren Form davon 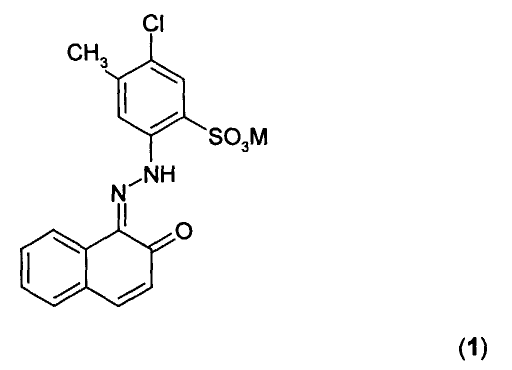 worin M ein Kation ist, mit der Maßgabe, daß mindestens 50 % der Kationen Calciumionen sind, gekennzeichnet durch folgende charakteristische Reflexe im Röntgenpulverdiffraktogramm, gemessen mit Cu-Kα-Strahlung:
ε( 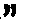 epsilon")-Phase:
| 2Θ | d | Iᵣₑₗ |
|---|---|---|
| 4.48 | 19.7 | 55 |
| 5.87 | 15.1 | 36 |
| 7.08 | 12.5 | 61 |
| 7.87 | 11.2 | 100 |
| 9.01 | 9.8 | 32 |
| 9.84 | 9.0 | 49 |
| 11.84 | 7.5 | 25 |
| 12.47 | 7.1 | 32 |
| 14.31 | 6.2 | 26 |
| 14.80 | 6.0 | 27 |
| 15.29 | 5.8 | 26 |
| 15.82 | 5.6 | 58 |
| 16.80 | 5.3 | 27 |
| 17.23 | 5.1 | 29 |
| 18.80 | 4.7 | 40 |
| 19.40 | 4.6 | 27 |
| 19.82 | 4.5 | 46 |
| 20.66 | 4.3 | 33 |
| 21.44 | 4.1 | 29 |
| 21.88 | 4.1 | 36 |
| 22.69 | 3.9 | 17 |
| 23.14 | 3.8 | 19 |
| 23.85 | 3.7 | 40 |
| 24.63 | 3.6 | 34 |
| 25.48 | 3.5 | 32 |
| 26.12 | 3.4 | 76 |
| 26.42 | 3.4 | 65 |
| 27.91 | 3.2 | 26 |
| 28.76 | 3.1 | 29 |
| 29.88 | 3.0 | 12 |
| 30.30 | 2.9 | 12 |
| 31.68 | 2.8 | 20 |
| 31.98 | 2.8 | 13 |
| 32.36 | 2.8 | 16 |
| 32.60 | 2.7 | 17 |
ζ ( 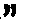 zeta")-Phase:
| 2Θ | d | Iᵣₑₗ |
|---|---|---|
| 5.10 | 17.3 | 24 |
| 7.13 | 12.4 | 62 |
| 7.97 | 11.1 | 100 |
| 10.09 | 8.8 | 68 |
| 14.27 | 6.2 | 54 |
| 14.67 | 6.0 | 24 |
| 15.92 | 5.6 | 14 |
| 17.13 | 5.2 | 18 |
| 17.84 | 5.0 | 40 |
| 18.70 | 4.7 | 18 |
| 19.07 | 4.7 | 20 |
| 19.93 | 4.5 | 29 |
| 21.53 | 4.1 | 26 |
| 22.76 | 3.9 | 56 |
| 23.58 | 3.8 | 92 |
| 24.58 | 3.6 | 28 |
| 25.25 | 3.5 | 16 |
| 25.95 | 3.4 | 99 |
| 27.38 | 3.3 | 29 |
| 27.95 | 3.2 | 14 |
| 28.62 | 3.1 | 48 |
η( 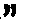 eta")-Phase:
| 2Θ | d | Iᵣₑₗ |
|---|---|---|
| 4.57 | 19.3 | 100 |
| 9.07 | 9.7 | 68 |
| 12.18 | 7.3 | 45 |
| 14.77 | 6.0 | 65 |
| 21.09 | 4.2 | 30 |
| 26.60 | 3.3 | 96 |
θ( 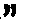 theta")-Phase:
| 2Θ | d | Iᵣₑₗ |
|---|---|---|
| 5.17 | 17.0 | 26 |
| 10.34 | 8.5 | 13 |
| 12.17 | 7.3 | 9 |
| 13.24 | 6.7 | 10 |
| 14.60 | 6.1 | 23 |
| 15.79 | 5.6 | 15 |
| 16.63 | 5.3 | 27 |
| 17.80 | 5.0 | 28 |
| 18.04 | 4.9 | 16 |
| 19.71 | 4.5 | 13 |
| 21.06 | 4.2 | 17 |
| 24.08 | 3.7 | 12 |
| 24.47 | 3.6 | 12 |
| 25.82 | 3.4 | 100 |
| 26.67 | 3.4 | 33 |
| 27.81 | 3.2 | 10 |
| 28.52 | 3.1 | 17 |
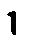 ( 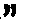 jota")-Phase:
| 2Θ | d | Iᵣₑₗ |
|---|---|---|
| 4.20 | 21.1 | 100 |
| 8.35 | 10.6 | 93 |
| 10.86 | 8.1 | 60 |
| 11.42 | 7.7 | 35 |
| 12.37 | 7.2 | 56 |
| 13.84 | 6.4 | 32 |
| 15.48 | 5.7 | 64 |
| 15.94 | 5.6 | 40 |
| 16.45 | 5.4 | 43 |
| 17.05 | 5.2 | 33 |
| 17.50 | 5.1 | 31 |
| 18.59 | 4.8 | 63 |
| 19.58 | 4.5 | 47 |
| 19.86 | 4.5 | 52 |
| 20.80 | 4.3 | 42 |
| 21.13 | 4.2 | 32 |
| 21.30 | 4.1 | 35 |
| 21.64 | 4.1 | 34 |
| 22.14 | 4.0 | 26 |
| 22.33 | 4.0 | 29 |
| 22.77 | 3.9 | 36 |
| 23.25 | 3.8 | 39 |
| 23.59 | 3.8 | 93 |
| 24.07 | 3.7 | 45 |
| 25.49 | 3.5 | 64 |
| 26.46 | 3.4 | 55 |
| 26.69 | 3.3 | 35 |
| 29.49 | 3.0 | 45 |
κ( 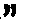 kappa")-Phase:
| 2Θ | d | Iᵣₑₗ |
|---|---|---|
| 6.55 | 13.5 | 32 |
| 12.62 | 7.0 | 26 |
| 12.99 | 6.8 | 28 |
| 13.73 | 6.4 | 50 |
| 14.33 | 6.2 | 36 |
| 15.01 | 5.9 | 32 |
| 15.47 | 5.7 | 30 |
| 16.30 | 5.4 | 24 |
| 16.78 | 5.3 | 23 |
| 17.14 | 5.2 | 38 |
| 18.31 | 4.8 | 60 |
| 18.70 | 4.7 | 44 |
| 20.39 | 4.4 | 25 |
| 24.33 | 3.4 | 22 |
| 24.70 | 3.6 | 38 |
| 25.34 | 3.5 | 48 |
| 26.14 | 3.4 | 100 |
| 27.24 | 3.3 | 27 |
| 28.00 | 3.2 | 24 |
| 28.25 | 3.2 | 24 |
| 29.91 | 3.0 | 22 |
λ( 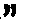 lambda")-Phase:
| 2Θ | d | Iᵣₑₗ |
|---|---|---|
| 5.03 | 17.5 | 100 |
| 5.35 | 16.5 | 57 |
| 6.88 | 12.8 | 26 |
| 9.43 | 9.4 | 23 |
| 11.09 | 8.0 | 30 |
| 13.78 | 6.4 | 17 |
| 14.36 | 6.2 | 21 |
| 15.70 | 5.6 | 15 |
| 18.25 | 4.9 | 18 |
| 18.90 | 4.7 | 19 |
| 20.36 | 4.4 | 16 |
| 20.68 | 4.3 | 16 |
| 21.38 | 4.2 | 15 |
| 22.90 | 3.9 | 18 |
| 24.46 | 3.6 | 22 |
| 25.00 | 3.6 | 18 |
| 26.14 | 3.4 | 28 |
| 28.54 | 3.1 | 14 |
ν( 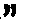 ny")-Phase:
| 2Θ | d | Iᵣₑₗ |
|---|---|---|
| 4.76 | 18.5 | 64 |
| 7.70 | 11.5 | 43 |
| 9.22 | 9.6 | 24 |
| 9.50 | 9.3 | 46 |
| 11.64 | 7.6 | 15 |
| 12.74 | 6.9 | 21 |
| 13.43 | 6.6 | 33 |
| 13.76 | 6.4 | 15 |
| 14.11 | 6.3 | 13 |
| 14.27 | 6.2 | 15 |
| 15.72 | 5.6 | 16 |
| 16.26 | 5.4 | 10 |
| 17.37 | 5.1 | 12 |
| 17.73 | 5.0 | 20 |
| 18.95 | 4.7 | 20 |
| 19.91 | 4.5 | 20 |
| 20.45 | 4.3 | 12 |
| 20.87 | 4.3 | 19 |
| 21.51 | 4.1 | 13 |
| 22.79 | 3.9 | 21 |
| 23.12 | 3.8 | 28 |
| 23.44 | 3.8 | 20 |
| 24.59 | 3.6 | 17 |
| 25.26 | 3.5 | 49 |
| 25.96 | 3.4 | 29 |
| 26.35 | 3.4 | 100 |
| 27.05 | 3.3 | 44 |
| 28.03 | 3.2 | 14 |
| 28.72 | 3.1 | 10 |
| 29.38 | 3.0 | 8 |
| 29.89 | 3.0 | 7 |
| 31.30 | 2.9 | 9 |
| 32.12 | 2.8 | 7 |
| 32.50 | 2.8 | 9 |
| 33.27 | 2.7 | 8 |
ξ( 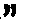 xi")-Phase:
| 2Θ | d | Iᵣₑₗ |
|---|---|---|
| 4.88 | 18.1 | ca. 50 |
| 7.83 | 11.3 | 100 |
| 8.59 | 10.3 | 39 |
| 11.57 | 7.6 | 21 |
| 15.76 | 5.6 | 34 |
| 17.06 | 5.2 | 46 |
| 17.40 | 5.1 | 24 |
| 19.66 | 4.5 | 36 |
| 19.99 | 4.4 | 54 |
| 20.40 | 4.4 | 27 |
| 21.41 | 4.1 | 28 |
| 21.83 | 4.1 | 31 |
| 24.49 | 3.6 | 68 |
| 25.00 | 3.6 | ca. 70 |
| 26.83 | 3.3 | 21 |
| 27.15 | 3.3 | 17 |
| 31.33 | 2.9 | 20 |
| 31.60 | 2.8 | 18 |
ο( 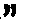 mikron")-Phase:
| 2Θ | d | Iᵣₑₗ |
|---|---|---|
| 12.54 | 7.1 | 58 |
| 13.61 | 6.5 | 44 |
| 17.33 | 5.1 | 47 |
| 18.64 | 4.8 | 52 |
| 19.48 | 4.6 | 26 |
| 24.56 | 3.6 | 100 |
| 25.43 | 3.5 | 56 |
π( 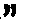 pi")-Phase:
| 2Θ | d | Iᵣₑₗ |
|---|---|---|
| 5.60 | 15.8 | 100 |
| 9.09 | 9.7 | 82 |
| 9.62 | 9.2 | 72 |
| 11.21 | 7.9 | 27 |
| 11.65 | 7.6 | 4 |
| 12.86 | 6.9 | 5 |
| 15.24 | 5.8 | 6 |
| 15.88 | 5.6 | 22 |
| 16.85 | 5.3 | 14 |
| 18.23 | 4.9 | 21 |
| 19.07 | 4.7 | 35 |
| 19.40 | 4.6 | 54 |
| 20.82 | 4.3 | 20 |
| 22.23 | 4.0 | 24 |
| 23.02 | 3.9 | 27 |
| 23.49 | 3.8 | 23 |
| 24.79 | 3.6 | 98 |
| 26.01 | 3.4 | 41 |
| 27.66 | 3.2 | 75 |
| 28.20 | 3.2 | 10 |
| 30.12 | 3.0 | 9 |
| 30.85 | 2.9 | 9 |
| 31.34 | 2.9 | 9 |
| 31.52 | 2.8 | 6 |
| 31.59 | 2.8 | 6 |
ρ( 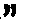 rho")-Phase:
| 2Θ | d | Iᵣₑₗ |
|---|---|---|
| 4.96 | 17.8 | 100 |
| 6.05 | 14.6 | 60 |
| 8.48 | 10.4 | 22 |
| 9.95 | 8.9 | 14 |
| 13.93 | 6.4 | 13 |
| 15.12 | 5.9 | 13 |
| 15.51 | 5.7 | 13 |
| 17.54 | 5.1 | 14 |
| 19.41 | 4.6 | 14 |
| 20.99 | 4.2 | 12 |
| 21.50 | 4.1 | 14 |
| 24.64 | 3.6 | 13 |
| 25.44 | 3.5 | 23 |
| 26.00 | 3.4 | 40 |
| 26.89 | 3.3 | 16 |
| 28.15 | 3.2 | 11 |
oder eine Mischung davon.

9. C.I. Pigment Red 53:2-Mischung oder -Mischkristall, enthaltend mindestens 10 Gew.-%, vorzugsweise mindestens 25 Gew.-%, insbesondere mindestens 50 Gew.-%, besonders bevorzugt mindestens 75 Gew.-%, einer oder mehrerer der in Anspruch 8 definierten Phasen.

10. Verwendung von C.I. Pigment Red 53:2 nach Anspruch 8 oder 9 zum Pigmentieren von Lacken, Kunststoffen, Druckfarben, elektrophotographischen Tonern und Entwicklern, Pulverlacken, Ink-Jet-Tinten, Farbfiltern sowie zur Herstellung von wäßrigen Pigmentpräparationen und zur Saatguteinfärbung.
